# EUROPEAN PATENT APPLICATION

(11) **EP 2 107 849 A1**
(43) Date of publication of application: **07.10.2009**
(21) Application number: 08006510.5
(22) Date of filing: 31.03.2008
(51) Int. Cl.: H04W 72/04

(54) **A method for data transmission over the MAC layer in a wireless mesh network**

(71) Applicant: SIEMENS AKTIENGESELLSCHAFT, 80333 München (DE)
(72) Inventor: Haddad, Wissam, 6 Dublin (IE)

(57) **Abstract**

The invention refers to a method for data transmission over the MAC layer in a mesh network comprising several nodes, each node being operated based on a duty cycle comprising an active time interval in which the node is in an active state and an inactive time interval in which the node is in an inactive state. Frames are transmitted between a first node and a second node such that, in case that the first node detects that a frame is not received by the second node, the active time interval of the first node is incremented and the frame is retransmitted. This incrementing step combined with a retransmission of the frame is preferably repeated several times. Due to the incrementing step, the probability of an overlap between the active time intervals of neighboring nodes in enhanced such that the connectivity of the network nodes in the MAC layer is improved. After having performed one or more incrementing steps, the active time interval is decremented in one or more decrementing steps in order to reduce the power consumption of the nodes. Due to the incrementing and decrementing steps, a mesh network is established providing high connectivity as well as low power consumption of the nodes. Another advantage of the invention is that the nodes do not have to synchronize their active time intervals with each other, e.g. by transmitting beacons, resulting in a fully decentralized scheme for reducing power. Preferably, the invention is used in the non beacon enabled mode in the wireless MAC layer of the standard IEEE 802.15.4.

## Description

The invention relates to a method for data transmission over the MAC layer (MAC = Media Access Control) in a mesh network comprising several nodes.

In mesh networks, a transmission of data is achieved by multi-hop communication between neighboring nodes in the network. To do so, the layers of the OSI reference model are used comprising as the lowest layers the physical layer followed by the MAC layer. The MAC layer is based on the so-called media access control protocol providing addressing and channel access control mechanisms to make it possible for several network nodes to communicate within a mesh network.

Particularly in wireless mesh network, e.g. in sensor networks, there is the problem that the power consumption of several nodes has to be low because the nodes are often operated by independent energy resources, such as batteries. Therefore, duty cycles are defined comprising an inactive time interval in which a node is in an inactive state and an active time interval in which a node is in an active state. Active state means that the node is in full power state and can communicate with other nodes whereas a node in an inactive state is not in a full power state and cannot communicate with other nodes. When transmitting a frame in the MAC layer from one node to another, both the sending node and the receiving node have to be in an active state. Due to the use of such duty cycles, the power consumption of each node may be reduced but the connectivity of the network is deteriorated because a frame sent from one node in an active state to another node in an inactive state will result in a transmission failure.

According to the standard IEEE 802.15.4 referring to the definition of a wireless MAC layer and physical layer for low-rate wireless personal area networks, there exists a so-called beacon enabled mode for synchronizing the active state intervals of the nodes for providing high connectivity in the network. However, there is no solution in the prior art enabling an efficient data transmission in the MAC layer when the nodes in the mesh network do not communicate with each other in a synchronized way, i.e. when the nodes do not have knowledge of other node states or of the network topology.

Therefore, it is an object of the invention to provide a method for data transmission over the MAC layer in a mesh network, wherein a data transmission with high connectivity and low power consumption is provided in an operation mode where the nodes are not synchronized with each other.

This object is solved by the method according to claim 1 and the mesh network according to claim 15. Preferred embodiments are defined in the dependent claims.

The method according to the invention is used for data transmission over the MAC layer in a mesh network comprising several nodes, each node being operated based on a duty cycle comprising an active time interval in which the node is in an active state and an inactive time interval in which the node is in an inactive state. According to the method of the invention, frames are transmitted between nodes such that the transmission of a frame between a first node and a second node comprises the following steps:
a) the first node transmits a frame to be received by the second node during the active time interval of the first node;
b) if the first node detects that the frame is not received by the second node, the following step i) is performed:
   i) the first node adapts its duty cycle by incrementing the active time interval in an incrementing step and retransmits the frame whereupon step b) is repeated if step b) is performed less than a predetermined number of times, wherein the predetermined number of times is for example three (as it is the case for IEEE standard 802.15.4) or more times or less than three times, i.e. once or twice;
c) if the first node detects that the frame is received by the second node, the transmission of the frame between the first node and second node is terminated whereupon, if at least the condition is met that step i) has been performed at least once, the first node adapts its duty cycle by decrementing the active time interval in one or more decrementing steps;
d) if the first node detects that the frame is not received by the second node, a transmission failure is detected whereupon, if at least the condition is met that step i) has been performed at least once, the first node adapts its duty cycle by decrementing the active time interval in one or more decrementing steps.

Incrementing the active time interval of a node according to the invention ensures a higher probability of overlapping active state periods of the node with its neighboring nodes. This leads to an improved connectivity because fewer frames will be dropped due to an unacknowledged unsuccessful transmission. Hence, the frame delivery ratio and throughput will increase through the different hops of the network. The decrementing of the inactive time interval of a node will reduce the power consumption of the node. Hence, the method of the invention will ensure an adaptation of the duty cycles of each node with respect to the tradeoff between power consumption and ensuring a successful relay of the frames. The adaptation of the duty cycle according to the invention is totally transparent to the higher routing layers without any explicit cross layer design. Hence, the protocol development and implementation is a simple and scalable process.

The adaptation of the active time intervals according to the invention will impart performance improvements in the MAC layer and higher routing layers. A major benefit of the method is that the optimal state condition of each node is reached without any knowledge of the distribution of the inactive state periods of its neighboring nodes. The adaptation of the duty cycle of each node is done without any acquaintance of topology of the network or its topology change. The invention provides a self-adaptation mechanism of the states for each node based on the self-contribution of the node for relaying frames in the multi-hop communication in the mesh network. This fully decentralized solution conserves the transmitting power of each node and increases the incentive to relay frames just based on the success of the transmission. Accordingly, nodes that are relaying frames frequently will adapt to the neighboring nodes in order to contribute best to successful multi-hop communication. Nodes that are on the border of the network not involved in the transmission of the frames will consume less power.

In a preferred embodiment of the invention, the method is used in the wireless MAC layer of the standard IEEE 802.15.4 and the nodes are operated in the non beacon enabled mode of this standard. The invention is particularly useful in this operation mode because each node does not have any knowledge of the active and inactive state intervals of the other nodes in this mode.

In another embodiment of the invention, an incrementing and/or decrementing step of the active time interval is such that the overall length of the duty cycle is not changed. I.e., when an active time interval is incremented/decrement-ted, the corresponding inactive time interval is decremented/incremented by the same amount of time. Alternatively, the incrementing and/or decrementing step may be such that the length of the duty cycle is adapted.

In another embodiment of the invention, the condition in step c) and/or step d) that step i) has been performed at least once, is the only condition to be met. However, it is also possible that in step d) the condition that a transmission failure has been detected subsequently for a predetermined number of times has to be met besides the condition that step i) has been performed at least once. According to this mechanism, the connectivity is enhanced. This is because only in case that the node seems to be unavailable, the active time interval is decremented.

In another embodiment of the invention, the transmission failure detected in step d) is notified by the first node to a routing layer, e.g. the well-known ZigBee layer, in order to rediscover a new route for data transmission in the routing layer. As the invention first tries to retransmit the frames in the MAC layer, fewer transmission failure messages will be passed to the routing protocol in this embodiment. As a result, fewer route discovery requests will be initiated at the routing layer and a lower control overhead will be generated.

In a preferred embodiment of the invention, the active time interval in step c) and/or d) is decremented in the same number of steps and/or the same amounts as the time interval has been incremented in step b) before.

In another embodiment of the invention, the first node detects that the frame is received by the second node when an acknowledgement message transmitted from the second node is received by the first node.

The amount of increment and/or decrement of the active time interval may be constant in one embodiment of the invention. However, it is also possible that the amount of increment and/or decrement of the active time interval is varying in dependence on one or more criteria. E.g. the active time interval may be incremented and/or decremented in dependence on a function, e.g. based on a linear or geometric or exponential series. The one or more criteria may also comprise the density of the nodes in the network and/or the traffic loads and/or the rate of change of the traffic patterns in the network. E.g. the amount of increment and/or decrement may decrease with an increasing density of the nodes.

In a preferred embodiment of the invention, the active time interval is decremented at the opposite end of the time interval at which the active time interval has been incremented. This results in a shift of the active time intervals and the overall duty cycles between neighboring nodes such that an overlap between active time intervals generated during the incrementing steps is maintained after decrementing the active time interval. As a consequence, the connectivity between the nodes in the network is enhanced.

In another embodiment of the invention, the method is performed in a wireless sensor network including a plurality of sensor nodes. Such sensor nodes are in many cases operated by battery so that the invention is particularly useful for such sensor networks because it provides low power consumption in combination with a high connectivity of the sensor nodes. As a basic principle, the invention is preferably used in a mesh network comprising at least partially battery operated nodes.

Besides the above described method, the invention also refers to a mesh network for data transmission over the MAC layer, comprising several nodes, each node being operable based on a duty cycle comprising the above described active time interval and inactive time interval, wherein frames are transmitted between nodes during operation of a mesh network based on any variant of the above described method.

Embodiments of the invention will now be described with respect to the accompanying drawings wherein:
- Fig. 1: shows a schematic view of three nodes in a wireless mesh network transmitting frames in the MAC layer based on an embodiment of the invention;

- Fig. 2 to Fig. 11: show diagrams illustrating the adaptation of the duty cycles in nodes A to C of Fig. 1 according to a preferred embodiment of the invention.

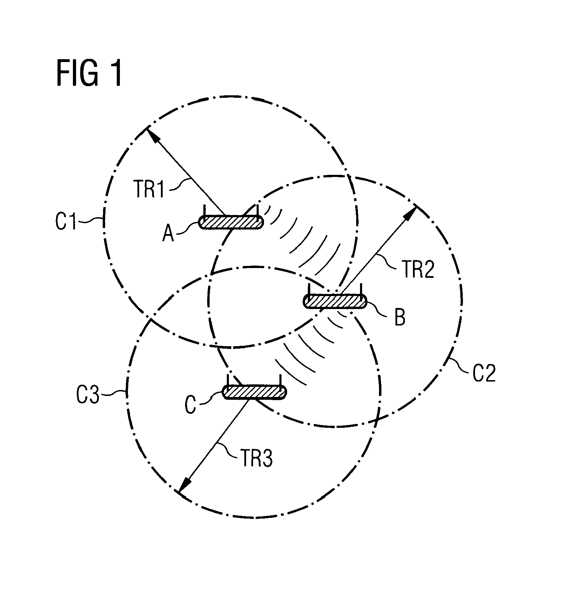

Fig. 1 shows a schematic view of a mesh network comprising nodes A, B and C. Each node has a corresponding transmission range for its wireless signals indicated by cycles C1, C2 and C3 as well as arrows TR1, TR2 and TR3. The nodes form part of a bigger mesh network comprising additional nodes. In the physical layer and the MAC layer, the wireless communication between the nodes is based on the IEEE Protocol 802.15.4 describing low-rate wireless communication for personal area networks. In such networks, low power consumption of the nodes is a major constraint to ensure a lifetime of the connectivity of the network.

In the embodiment of Fig. 1, the nodes A, B and C are for example sensor nodes being operated by battery such that the power consumption for communication should be kept small in order to prolong the operation lifetime of the sensor nodes. To do so, a duty cycle is defined for each node comprising an active time interval in which the node is in an active state for sending and receiving data and an inactive time interval in which the node is in an inactive state where data cannot be sent and received by the node.

The MAC protocol according to the standard IEEE 802.15.4 allows two different operation modes. The first operation mode refers to the beacon enabled mode where all nodes of the network send periodic beacons for synchronization and tracking for inactive states of other nodes. This operation mode provides a good connectivity between the nodes because the synchronization ensures that frames in the MAC layer are only sent to nodes in active states. The second operation mode refers to the non beacon enabled mode where all nodes in the network communicate with each other in a non synchronized way. This mode has the problem of a reduced connectivity between the nodes because there is no synchronization of the nodes. Hence, a frame in the MAC layer may be sent to a node which is in an inactive state, thus resulting in a transmission failure.

The invention as described hereinafter refers to an enhancement of the non beacon enabled mode of the IEEE standard 802.15.4 by providing a mechanism enabling a better connectivity on the MAC layer together with a low power consumption in this non beacon enabled mode. Hence, nodes A to C of Fig. 1 are operated in a non beacon enabled mode such that each node does not know the duty cycle of the other node, i.e. at which times the other node is in its active or inactive state.

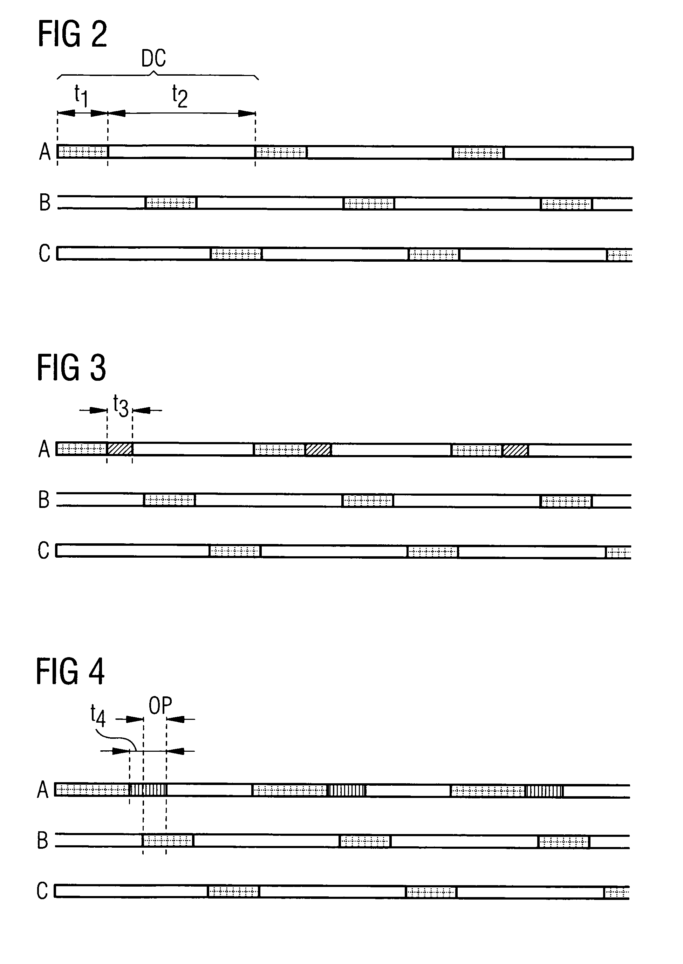

In the following, it will be described with respect to Fig. 2 to 11 how an improved transmission with low failures based on the non beacon enabled operation mode is achieved between nodes A to C. In Fig. 2 to 11, there are shown three bars A to C indicating the active and inactive time intervals of the respective nodes A to C. In each of Fig. 2 to 11, a time interval of inactivity of a respective node is denoted by a white bar whereas a time interval of an active state is denoted by a patterned bar including a pattern of dotted squares.

Fig. 2 shows the duty cycles of nodes A to C wherein a duty cycle of node A is denoted as DC. Each duty cycle includes an active time interval t1 as well as an inactive time interval t2. Fig. 2 is an illustrative example of a non beacon enabled node in which the duty cycles of each node have the same length and the same ratio of inactive and active time intervals. In real networks, the duty cycles as well as the ratios of inactive and active time intervals could be different for each node. As the nodes are not synchronized, the duty cycles of the nodes are offset from each other. Hence, the problem arises that a frame which is sent in the active time interval t1 of node A in Fig. 2 will not reach node B because node B is in an inactive state when node A is in its active state.

According to the state of the art, a frame transmission from node A to node B would result in a transmission failure in the MAC layer with the consequence that this failure will be notified to a higher routing layer which is preferably based on the so-called ZigBee protocol standardized by the ZigBee alliance. This alliance has developed the routing and application protocols on top of the IEEE 802.15.4 MAC layer. Hence, in the scenario of Fig. 2, a transmission failure message will be immediately passed to the higher routing layer due to an unsuccessful transmission of a frame between node A and node B. As a consequence, the routing protocol will initiate a route discovery at the routing layer in order to find a new route for data transmission.

In the embodiment described herein, a transmission failure is detected by node A using common prior art methods, particularly by a timeout used for waiting for an acknowledgement reception following the successful application of a carrier sensing of the channel as defined in the standard IEEE 802.15.4. Hence, an acknowledgement of the reception of a frame from node B is expected in node A. In case that such an acknowledgement is not received within a specific time by node A, a transmission failure is detected. In a preferred embodiment, the transmission of the frames and the detection of a transmission failure is based on the so-called unslotted CSMA/CA mechanism which is well known in the art (CSMA/CA = Carrier Sense Multiple Access Collision Avoidance).

In contrast to the state of the art, the invention described in the following will not immediately initiate a new route discovery but will at first try to find a way to transmit the data packet within the MAC layer. According to Fig. 3, this will be done by incrementing the original inactive time interval t1 of node A by an increment t3, which is shown as an obliquely hatched bar in Fig. 3. Thereafter, the frame whose transmission failed in Fig. 2 will be retransmitted. The increment t3 of the active time interval is not big enough so that no overlap between the active states of node A and node B is achieved. Hence, another transmission failure will be detected.

According to the embodiment of the invention described herein, after the first unsuccessful retransmission, the active state time interval will be incremented once again by the increment t4 indicted as a vertically hatched bar in Fig. 4. Thereafter, the frame is retransmitted and will be received by the node B. This is because there is an overlap OP between the active state of node A and node B such that the retransmitted frame can be received by node B in its active state. The step of incrementing the time interval after an unsuccessful frame transmission will be repeated at maximum three times. Thereafter, a transmission failure will be notified to the higher routing layer in order to initiate a new route discovery.

As evident from Fig. 2 to 4, the active time interval is prolonged in two steps by adding an increment at the end of the active time interval and by simultaneously decreasing the inactive time interval such that the length of the overall duty cycle DC remains constant. Nevertheless, there is also the possibility that the decrement is different from the increment, thus resulting in an adoption of the duty cycle. Furthermore, it may also be possible to add the increment at the beginning of the active time interval and/or to change the overall length of the duty cycle, e.g. by not changing the inactive time period.

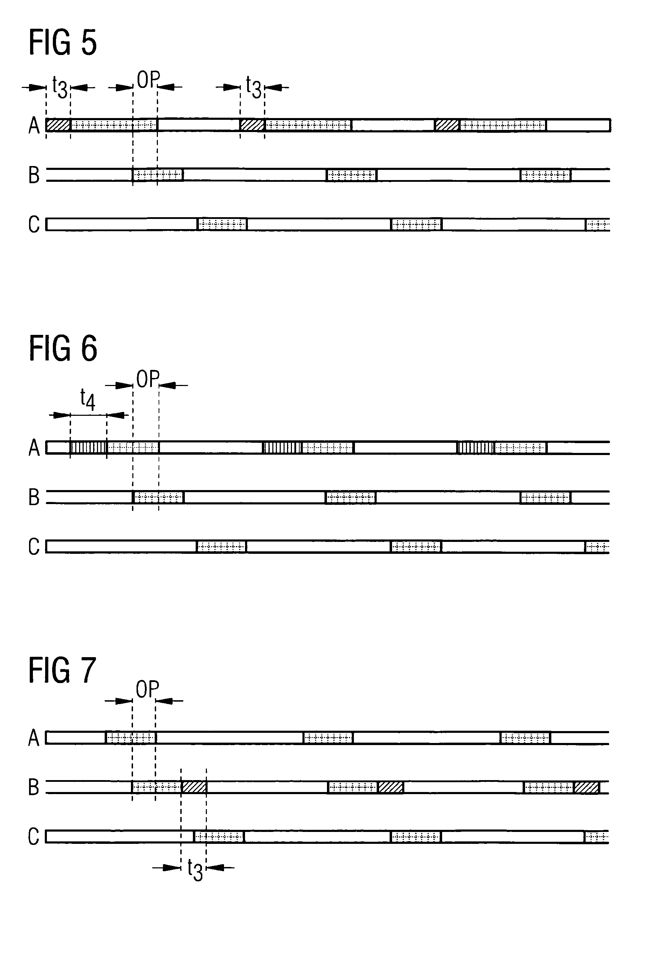

In the situation of Fig. 4, the active time interval of node A has been prolonged twice, thus resulting in a higher connectivity but also in a higher power consumption. In order to reduce this power consumption, the active time period will be decreased after the successful transmission of the frame in Fig. 4. This is shown in Fig. 5. According to this figure, node A triggers a corresponding decrementing function which decrements the active time interval by the same amount t3 with which the active time interval has been incremented in the step according to Fig. 3. This decrementing is shown as an obliquely hatched bar, analogously to the incrementing step in Fig. 3. However, the decrementing function is now applied at the beginning of the active state interval of node A with the consequence that the overlap OP between the active time intervals of node A and node B is maintained.

In a further step, shown in Fig. 6, a second decrementing is performed in order to compensate for the incrementing performed in Fig. 4. This is indicated by a vertically hatched bar in Fig. 6. The active time interval of node A is decremented by the same amount of time t4 as in Fig. 4. However, the decrementing function is applied at the beginning of the active time interval, thus still maintaining the overlap OP between the active states of nodes A and B. Hence, according to the invention, after applying the decrementing function, the power consumption is reset to the status as shown in Fig. 1. Nevertheless, due to the decrementing which is applied at the beginning of the active state of node A, the active state interval of node A is shifted such that an overlap OP is generated between node A and node B.

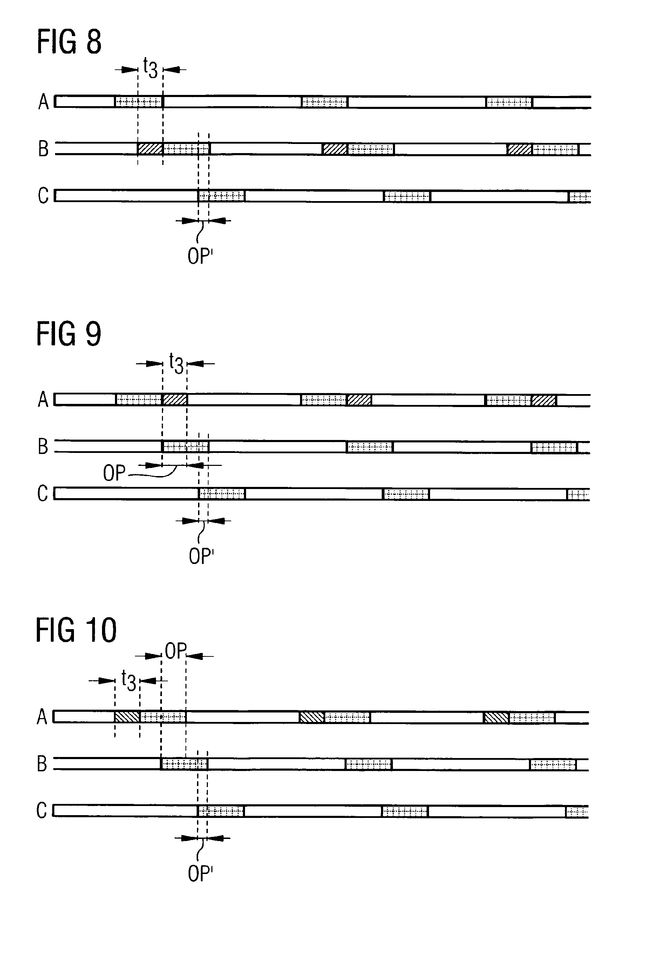

In the following, the subsequent transmission of the frame received by node B to node C will be described. As can be seen from Fig. 6, the same problem as shown in Fig. 2 arises, i.e. there is no overlap between the active state interval of node B and node C resulting in a transmission failure of the frame to be transmitted to node C. Analogously to Fig. 3, the time interval of the active state of node B will now be incremented in Fig. 7 by t3 with the consequence that a corresponding overlap will be generated between the active time intervals of node B and node C. This overlap is designated as OP' in Fig. 8. After incrementing the time interval, the frame which has not been received before due to the lacking overlap between the active time intervals of node B and node C will now be retransmitted and successfully received by node C.

Thereafter, node B will initiate its decrementing function, thus shortening the active state interval by the respective time period t3 shown as obliquely hatched bar in Fig. 8. Therefore, there will no longer be an overlap between the active time intervals of node A and node B with the consequence that a subsequent frame sent by node A will not be received by node B. Therefore, node A will once again increment its time interval by t3 shown as obliquely hatched bar in Fig. 9. Thereafter, a retransmission of the subsequent frame will be successful because there will be a new overlap OP between node A and node B. The subsequent frame will also be successfully transmitted from node B to node C because there still exists the overlap OP' between node B and node C.

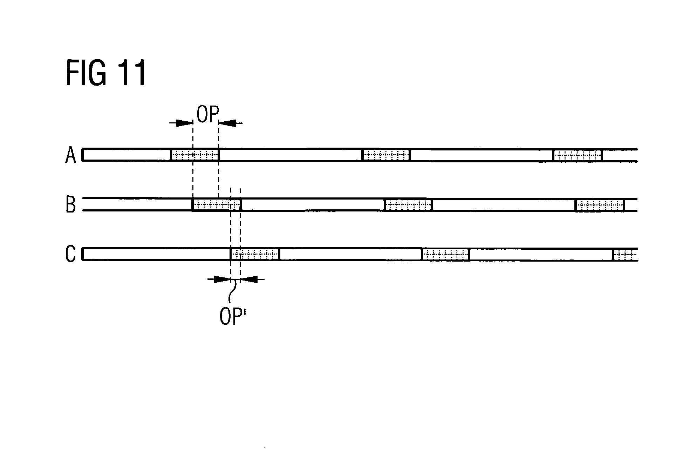

Eventually, after the successful transmission of the subsequent frame from node A to node B, node A will once again decrease its active time interval by shortening this interval at the beginning by the time period t3 which is indicated as the obliquely hatched bar in Fig. 10. Hence, as shown in Fig. 11, a situation is reached wherein the duty cycles of nodes A, B and C are shifted such that there exists a common overlap OP between node A and node B and a common overlap OP' between node B and node C, thus resulting in a successful transmission of subsequent frames between those nodes without the need to call a new route discovery in a higher routing protocol. Furthermore, the power consumption of the nodes will be as low as at the beginning of the procedure shown in Fig. 1 because the active state intervals for each node in Fig. 11 are the same as in Fig. 1.

The invention as described in the foregoing has the following advantages:

The self adaptability of the state of a node is based on its self contribution for relaying frames in the multi-hop communication network. This fully decentralized solution conserves the power of the transmitting node and increases the incentive to relay frames just based on the success of the transmission.

In case of a route failure and an initiation of a route discovery, the distribution of the active state periods of the nodes in the network will be different from the initial set up. As a result, the probability to discover new routes with already overlapping active state periods is increased and the adaptation algorithm converges. Hence, the robustness of the network will improve due to the lower probability of non reachable nodes in the network

Routing stability will improve for the reason that less route flapping due to non available communication relays occurs.

To damp the effect of frequent shifts of the active state period of the node upon several (particularly three) unsuccessful retransmissions, a learning experience can be applied to call the decrementing active state period function only after a number of unsuccessful new discovered routes.

## Claims

1. A method for data transmission over the MAC layer in a mesh network comprising several nodes (A, B, C), each node (A, B, C) being operated based on a duty cycle (DC) comprising an active time interval (t1) in which the node (A, B, C) is in an active state and an inactive time interval (t2) in which the node (A, B, C) is in an inactive state, wherein frames are transmitted between nodes (A, B, C) such that the transmission of a frame between a first node (A, B, C) and a second node (A, B, C) comprises the following steps:
a) the first node (A, B, C) transmits a frame to be received by the second node (A, B, C) during the active time interval (t1) of the first node;
b) if the first node (A, B, C) detects that the frame is not received by the second node (A, B, C), the following step
i) is performed:
i) the first node (A, B, C) adapts its duty cycle (DC) by incrementing the active time interval (t1) in an incrementing step and retransmits the frame whereupon step b) is repeated if step b) is performed less than a predetermined number of times;
c) if the first node (A, B, C) detects that the frame is received by the second node (A, B, C), the transmission of the frame between the first node (A, B, C) and the second node (A, B, C) is terminated whereupon, if at least the condition is met that step i) has been performed at least once, the first node (A, B, C) adapts its duty cycle (DC) by decrementing the active time interval (t1) in one or more decrementing steps;
d) if the first node (A, B, C) detects that the frame is not received by the second node (A, B, C), a transmission failure is detected, whereupon, if at least the condition is met that step i) has been performed at least once, the first node (A, B, C) adapts its duty cycle (DC) by decrementing the active time interval (t1) in one or more decrementing steps.

2. The method according to claim 1, wherein the MAC layer is the wireless MAC layer of the standard IEEE 802.15.4 and the nodes (A, B, C) are operated in the non beacon enabled mode of this standard.

3. The method according to claim 1 or 2, wherein an incrementing and/or decrementing step of the active time interval (t1) is such that the overall length of the duty cycle is not changed or such that the length of the duty cycle is adapted.

4. The method according to one of the preceding claims,
wherein the condition in step c) and/or step d) that step i) has been performed at least once, is the only condition to be met.

5. The method according to one of the preceding claims,
wherein in step d) the condition that a transmission failure has been detected subsequently for a predetermined number of times has to be met besides the condition that step i) has been performed at least once.

6. The method according to one of the preceding claims,
wherein in step d) the transmission failure is notified by the first node (A, B, C) to a routing layer in order to rediscover a new route for data transmission in the routing layer.

7. The method according to one of the preceding claims,
wherein in step c) and/or d) the active time interval (t1) is decremented in the same number of steps and/or the same amounts as the time interval has been incremented in step b) before.

8. The method according to one of the preceding claims, wherein the first node (A, B, C) detects that the frame is received by the second node (A, B, C) when an acknowledgement message transmitted from the second node (A, B, C) is received by the first node.

9. The method according to one of the preceding claims,
wherein the amount of increment and/or decrement of the active time interval (t1) is varying in dependence on one or more criteria.

10. The method according to claim 9, wherein the active time interval (t1) is incremented and/or decremented based on a linear or geometric or exponential series.

11. The method according to claim 9 or 10, wherein the one or more criteria comprise the density of the nodes (A, B, C) in the network and/or the traffic loads and/or the rate of change of the traffic patterns in the network.

12. The method according to one of the preceding claims, wherein the active time interval (t1) is decremented at the opposite end of the time interval at which the active time interval (t1) has been incremented.

13. The method according to one of the preceding claims,
wherein the method is performed in a wireless sensor network including a plurality of senor nodes.

14. The method according to one of the preceding claims,
wherein the method is performed in a mesh network comprising at least partially battery operated nodes.

15. A mesh network for data transmission over the MAC layer, comprising several nodes (A, B, C), each node (A, B, C) being operable based on a duty cycle (DC) comprising an active time interval (t1) in which the node (A, B, C) is in an active state and an inactive time interval (t2) in which the node (A, B, C) is in an inactive state, wherein frames are transmitted between nodes (A, B, C) during operation of the mesh network such that the transmission of a frame between a first node (A, B, C) and a second node (A, B, C) comprises the following steps:
a) the first node (A, B, C) transmits a frame to be received by the second node (A, B, C) during the active time interval (t1) of the first node;
b) if the first node (A, B, C) detects that the frame is not received by the second node (A, B, C), the following step
i) is performed:
i) the first node (A, B, C) adapts its duty cycle (DC) by incrementing the active time interval (t1) in an incrementing step and retransmits the frame whereupon step b) is repeated if step b) is performed less than
a predetermined number of times;
c) if the first node (A, B, C) detects that the frame is received by the second node (A, B, C), the transmission of the frame between the first node (A, B, C) and the second node (A, B, C) is terminated whereupon, if at least the condition is met that step i) has been performed at least once, the first node (A, B, C) adapts its duty cycle (DC) by decrementing the active time interval (t1) in one or more decrementing steps;
d) if the first node (A, B, C) detects that the frame is not received by the second node (A, B, C), a transmission failure is detected, whereupon, if at least the condition is met that step i) has been performed at least once, the first node (A, B, C) adapts its duty cycle (DC) by decrementing the active time interval (t1) in one or more decrementing steps.

16. The network according to claim 15, wherein the network is operable such that a method according to one of claims 2 to 14 can be performed in the network.
